# EUROPEAN PATENT APPLICATION

(11) **EP 0 988 792 A1**
(43) Date of publication of application: **29.03.2000**
(21) Application number: 99202870.4
(22) Date of filing: 03.09.1999
(51) Int. Cl.: A21D 2/38, A21D 10/00

(54) **Food composition comprising a carrier material and a liquid malt extract**

(30) Priority: 23.09.1998 EP 98203185
(71) Applicant: UNILEVER N.V., 3000 DK Rotterdam (NL); UNILEVER PLC, London EC4P 4BQ (GB)
(72) Inventor: Rochau, Bernd, 89250 Senden (DE); Mueller-Oberhollenzer, Christina, Dammtorwall 15, 20355 Hamburg (DE); Geywitz, Peter, 89231 Neu-Ulm (DE)
(74) Representative: Rosen Jacobson, Frans Lucas M.

(57) **Abstract**

This invention concerns storage stable food ingredient compositions comprising:
30-90 wt% of a carrier
10-70 wt% of a liquid malt extract
less than 11 wt% water
and which compositions are free of emulsifiers and gas expanding agents and have a particle size between 1 and 500 micron.

## Description

This invention concerns storage stable food ingredient compositions that are based on liquid malt extracts and therefore have very good flavour properties for application in bread.

Bread improver systems that can be used in rye bread are known from EP 235601. According to the disclosers of this document the bread improver contains rye flour and in addition to that an extruded, roasted malt flour which should provide the flavour. This composition is made by a process wherein a flour, in particular a rye flour is combined with a malt flour with a watercontent of maximum 12 wt%, whereupon this mix is extruded at a temperature between 180 and 240 °C and the extrudate formed is diminuted.

The above process thus means that the use of liquid malt-extracts is excluded in this process, because these extracts have water contents of more than 12 wt%.

As a consequence of the use of malt flours the products obtained have relatively low maltose contents and therefore also low flavour performance. Moreover we found that the use of malt flour with a watercontent of less than 12 % led to problems with mixing during extrusion. Further the colour of the products made with such bread improvers remained very light, whereas the consumer prefers dark endproducts based on rye. Therefore the baker prefers to use bread improver systems that result in darker products when applied for bread making.

A similar disclosure can be found in EP 876 763. According to the examples a malt-extract is applied. As the malt-extract is used as a solid ingredient, the watercontent of the extracts must be low.

We now found that very good products could be obtained when a liquid malt-extract is applied as source for the malt flavour. The products so obtained are higher in maltose content than any of the prior art products and therefore also the flavour impression was improved over that of the prior art products. Moreover we found that problems with storage stability could be avoided, if our process for making these products was followed. Further we found that the problems with mixing in the extruder were overcome as well by using a liquid malt-extract in stead of a malt flour. In the products according to the invention very high levels of liquid malt-extract can be present. This cannot be achieved by any known prior art method.

In the above EP no indication can be found that liquid malt-extracts could be applied let it be that an indication can be found about what improvements could be obtained when applying a liquid malt-extract.

In our earlier EP publication 876 763 we also disclose a process that suitably can be applied for the preparation of extrudates for bakery application with which the dusting problems related with the use of dusting ingredients like enzymes can be avoided. According to this process a specific emulsifier (having a melting point between 40 and 60 °C) must be applied.
This document thus concerns another problem setting than we solved now, whereas the solution for that problem involves the use of a specific emulsifier, which complicates and limits the process tremendously.

According to WO 97/34503 expanded, malt flavoured confectionery shapes can be made by forming an extrudable edible composition containing malted milk and malt extract as main ingredients and extruding the composition with an incorporated expanding agent through a die. This process thus requires the use of both a malted milk and an expanding agent. This complicates and limits the processing. Moreover the products obtained are always expanded and thus have high volumes and low specific weight. This document thus does not provide a solution for how to make non-expanded products wherein no malted milk is used. We found a solution how to overcome the above drawbacks.

Therefore our invention concerns in the first instance a storage stable food ingredient composition, comprising:
(I) 30-90 wt%, preferably 40-80 wt%, more preferably 50-75 wt% of a carrier material based on carbohydrates and/or proteins
(ii) 10-70 wt%, preferably 20-60 wt%, more preferably 25-50 wt% of a liquid malt extract
(iii) < 11 wt%, preferably < 8 wt%, more preferably < 6 wt% water,
which composition is substantially free of both emulsifier and gas expanding agent, while it has a particle size between 1 and 500 micron, preferably between 10 and 250 micron.

The carrier material applied is preferably selected from the group consisting of: natural flour, predried flour, starch, modified starch, vegetable proteins, milk proteins, denatured proteins. Preferred carriers have a water content of 1-20 wt%.
In stead of a carrier per se it is also possible to use a premix of food ingredients and the carrier.
The liquid malt-extract that is applied comprises in general one or more sugars, in particular one or more of the following sugars are present: maltose, glucose, maltodextrin and saccharose, however other sugars can be present as well. The level of these sugars in liquid malt extracts is in general 20 to 80 wt%. Particularly preferred are liquid malt-extracts that contain >10 wt% maltose.
These liquid malt-extracts contain in general more than 10 wt%, preferably 12-35 wt%, most preferably 15-25 wt% water. The liquid malt can be obtained by a known process, wherein grain (barley or wheat) is soaked with water (up to 50% water-uptake). After germination, while introducing air, at 35-40 °C for 10-12 hrs a product is obtained, that is kiln-dried. This product is diminuted and fermented with amylases at 50-70 °C. Solids on separated from liquid and the liquid is concentrated by eveporation at 40-70 °C.

Very suitable products are obtained by first making an extrudate of the components having a relatively large particle size, whereupon this extrudate is milled to a smaller particle size of 1-500 micron, preferably 10-250 micron.

The products according to the invention can additionally contain other components. Very suitably these other components comprise one or more of the following ingredients: food grade enzymes, sugars, reducing agents, preservatives, souring agents, soy materials, milk components and fats.

Our products display a storage life time at ambient temperature (20-25 °C) of more than 4 months and even of more than 6 months.

Our novel products can be made by a process wherein a liquid malt extract with a water content of more than 10 wt%, preferably with a water content of 15-25 wt% is mixed with a carrier with a water content of 1-20 wt% or with a premix of this carrier and other food ingredients, the premix having a water content of 1-20 wt%, preferably the mixing is performed in an extruder under a pressure of at least 10 bar, preferably at least 15 bar and at a temperature of less than 100 °C, while the product obtained is diminuted under reduction of the water content, optionally after post drying to < 10 wt% and a product with a particle size of preferably 10-250 micron is collected. The post drying is preferably performed on products that still have too high water contents. This post drying can be performed by known methods, that do not harm the product performance.

A very beneficial process comprises a process wherein the maltose level in the end product is not obtained in one step, but is obtained by building up of the maltose level in subsequent steps. Therefore part of our invention is also a process as disclosed above wherein 30-70 % of the total amount of malt extract required is added and the process of claim 8 is performed leading to a first product with a relatively low malt content whereupon this product is applied as starting material for a second phase, wherein the remaining part (30-70 % of total malt extract) of the malt extract is added and the process is repeated.

## Claims

1. Storage stable food ingredient composition, comprising:
(I) 30-90 wt%, preferably 40-80 wt%, more preferably 50-75 wt% of a carrier material based on carbohydrates and/or proteins
(ii) 10-70 wt%, preferably 20-60 wt%, more preferably 25-50 wt% of a liquid malt extract
(iii) < 11 wt%, preferably < 8 wt%, more preferably < 6 wt% water,
which composition is substantially free of both emulsifier and gas expanding agent, while it has a particle size between 1 and 500 micron, preferably between 10 and 250 micron.

2. Storage stable food ingredient composition according to claim 1, wherein the carrier is selected from the group consisting of: natural flour, predried flour, starch, modified starch, vegetable proteins, milk proteins, denatured proteins.

3. Storage stable food ingredient composition according to claims 1-2, wherein the liquid malt extract comprises one or more of the following sugars: maltose, glucose, maltodextrin and saccharose.

4. Storage stable food ingredient composition according to claim 3, wherein the liquid malt extract contains > 10 wt% maltose.

5. Storage stable food ingredient composition according to claims 1-4, wherein the composition is a milled extrudate, the extrudate having the composition mentioned in claim 1 but with a particle size greater than the particle size of the composition of claim 1.

6. Storage stable food ingredient composition according to claims 1-5, wherein the composition also comprises one or more of the following ingredients: food grade enzymes, sugars, reducing agents, preservatives, souring agents, soy materials, milk components and fats.

7. Storage stable food ingredient composition according to claims 1-6, wherein the composition displays a storage life at ambient T conditions of more than 4 months, in particular more than 6 months.

8. Process for the preparation of a storage stable food ingredient composition with the composition of claim 1, wherein a liquid malt extract with a water content of more than 10 wt%, preferably with a water content of 15-25 wt% is mixed with a carrier with a water content of 1-20 wt% or with a premix of this carrier and other food ingredients, the premix having a water content of 1-20 wt% preferably in an extruder under a pressure of at least 10 bar, preferably at least 15 bar and at a temperature of less than 100 °C, while the product obtained is diminuted under reduction of the water content, optionally after post drying to < 10 wt% and a product with a particle size of preferably 10-250 micron is collected.

9. Process according to claim 8, wherein the liquid malt extract is added in two phases, a first phase wherein 30-70 % of the total amount of malt extract required is added and the process of claim 8 is performed leading to a first product with a relatively low malt content whereupon this product is applied as starting material for a second phase, wherein the remaining part (30-70 % of total malt extract) of the malt extract is added and the process is repeated.
